# FASCICULE DE BREVET EUROPEEN

(11) **EP 2 460 399 B1**
(45) Date de publication et mention de la délivrance du brevet: **16.10.2013**
(21) Numéro de dépôt: 11358014.6
(22) Date de dépôt: 30.11.2011
(51) Int. Cl.: A01D 46/26, A01D 46/253, A01D 34/90

(54) **Outil aérien portatif, en particulier pour utilisation en arboriculture fruitière ou pour l'entretien d'espaces verts**
Tragbares Werkzeug, insbesondere zur Benutzung in der Obstbaumkultur und zur Instandhaltung von Grünflächen
Portable aerial tool, in particular for use in fruit arboriculture or for maintaining green areas

(30) Priorité: 02.12.2010 FR 1004698
(43) Date de publication de la demande: 06.06.2012
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A2- 1 621 063
- WO-A1-01/50838
- DE-A1- 10 332 973
- US-A1- 2009 188 354

## Description

La présente invention concerne un outil aérien portatif. Elle est utilisable en particulier en arboriculture fruitière, plus spécialement pour la récolte de petits fruits tels que, par exemple, olives, noix, noisettes, châtaignes, amandes, cerises du caféier, mirabelles et autres, ou pour l'entretien des espaces verts, par exemple pour la taille des arbres.

Des modes d'exécution de tels outils aériens portatifs sont par exemple décrits dans les documents WO-01/50838, EP-1 621 063, DE-103 32 973, FR-2.327.719, US-5.099.637, US-4.611.461 et FR-2.168.043. Ils comportent un outil dédié à une fonction déterminée, installé à l'extrémité distale d'un long manche ou perche dont la partie proximale est munie d'une poignée de préhension positionnée parallèle à l'axe dudit manche ou de ladite perche. De tels outils comprennent encore un système de commande et de gestion d'une motorisation positionnée à proximité dudit outil ou de ladite poignée.

La manipulation de ces outils aériens portatifs, lors de leur utilisation, nécessite leur tenue par les deux mains de l'opérateur. L'une des mains de ce dernier est placée autour de la perche, à distance de la poignée de préhension, tandis que l'autre main tient fermement ladite poignée de préhension.

La main qui tient le manche permet d'orienter l'outil par rapport à la position de l'opérateur, tandis que la main qui tient la poignée de préhension permet d'orienter l'outil autour de l'axe de la perche et de le maintenir pour le déplacer suivant l'axe de celle-ci.

En cours de travail, l'opérateur est continuellement amené à faire tourner l'outil autour de l'axe du manche afin de le positionner correctement par rapport au but recherché. Toutefois, l'angle de rotation est limité par l'amplitude maximum du mouvement rotatoire du poignet de la main de l'utilisateur qui tient la poignée de préhension, de sorte que cet angle ne peut dépasser environ 90°.

D'autre part, la prise en main de l'appareil dans la partie inférieure du manche peut amener l'utilisateur à se crisper sur la poignée de préhension pour maintenir, déplacer et faire tourner l'outil. Cette crispation de la main sur la poignée de préhension peut entrainer la propagation des vibrations de l'outil dans ladite main et le bras de l'utilisateur et provoquer une fatigue qui peut être une cause de traumatisme futur.

L'outil aérien décrit dans le document DE-103 32 973 comporte une poignée munie d'une gâchette de commande et dont l'orientation par rapport au manche peut- être modifiée après déblocage d'une bague de verrouillage. Cette poignée est destinée à être empoignée ; elle n'est pas montée avec une liberté de rotation.

Le document US 2009/0188354 A1 divulgue les caractéristiques techniques du préambule de la revendication 1.

La présente invention a notamment pour objet, sinon de supprimer totalement les inconvénients susmentionnés, du moins de réduire la gêne causée par ces inconvénients.

Selon l'invention, cet objectif est atteint au moyen d'un outil aérien portatif du genre susmentionné, remarquable par le fait que l'extrémité proximale du manche est munie d'un pommeau d'appui hémisphérique, ou comportant une base d'appui de forme hémisphérique, destiné à venir reposer dans le creux de la main de l'utilisateur et relié à ladite extrémité par un système de liaison autorisant une liberté de mouvement angulaire dudit manche par rapport audit pommeau d'appui ainsi que le soutien et le déplacement dudit manche suivant son axe.

Les degrés de liberté de la liaison entre le manche et le pommeau d'appui hémisphérique et le fait que l'utilisateur n'ait plus à serrer une poignée de préhension, permettent, sinon d'annuler, du moins de limiter la transmission des vibrations à la main et au bras de l'utilisateur tout en procurant une précision de positionnement de l'outil.

Selon les modes d'exécution de cet agencement, l'utilisateur peut commodément faire tourner le manche, et par conséquent, l'outil, de 0 à 360 °, au-delà de l'angle acceptable par son poignet et/ou le soutenir et le déplacer suivant son axe.

Les changements d'orientation de l'outil aérien par l'intermédiaire du manche ne nécessitent pratiquement aucun effort ; si l'on considère que ces changements d'orientation ou position sont continuels lors des travaux de récolte, il en résulte une réduction très sensible de la fatigue par rapport à l'utilisation des outils aériens de l'art antérieur.

D'autre part, il est également possible d'incliner commodément le manche dans n'importe quelle direction à partir d'un point d'appui dans la main.

Selon un exemple de réalisation avantageux du dispositif, le pommeau d'appui est disposé coaxialement au manche.

Selon un mode d'exécution avantageux, l'outil aérien selon l'invention est muni d'un boitier technique rigidement solidaire de la partie proximale de la perche, disposé dans le prolongement de ladite partie proximale de la perche, le pommeau d'appui (5) étant relié à l'extrémité distale dudit boitier constituant la partie proximale du manche.

Selon un exemple de mise en oeuvre avantageux, le boitier comporte un organe de connexion à une source de courant, et renferme un système de contrôle et de gestion du fonctionnement de l'outil ; il peut encore être muni d'un dispositif de commande.

Selon un exemple de réalisation intéressant, le dispositif de commande est constitué par un système électro-sensible intégré dans le pommeau d'appui.

Selon un mode de mise en oeuvre intéressant, le système de commande est constitué par un bouton poussoir disposé dans la partie centrale du pommeau d'appui hémisphérique et émerge de ce dernier dans la position d'arrêt de l'outil.

Selon un mode d'exécution intéressant, le système électro-sensible est constitué, d'une part, d'un aimant fixé à l'extrémité interne d'un bouton poussoir, et, d'autre part, d'un capteur à effet Hall disposé dans l'extrémité proximale du manche, en regard de l'aimant, ledit bouton poussoir étant disposé avec une aptitude de mouvement axial dans un logement ménagé dans le pommeau d'appui hémisphérique, de sorte à permettre le rapprochement ou l'éloignement de l'aimant par rapport au capteur à effet Hall, ledit bouton poussoir étant assujetti à l'action d'un organe élastique tendant à le repousser dans le fond du logement, de sorte à l'éloigner du capteur.

Selon un premier mode d'exécution avantageux, l'extrémité proximale du manche est reliée au pommeau d'appui hémisphérique par un agencement autorisant une liberté de rotation dudit manche autour de son axe.

Selon un deuxième mode de mise en oeuvre, l'extrémité proximale du manche est reliée au pommeau d'appui hémisphérique par l'intermédiaire d'une articulation sphérique.

Selon un troisième mode de réalisation, la partie proximale du manche est reliée au pommeau d'appui hémisphérique par l'intermédiaire d'un dispositif permettant une liberté de mouvement de rotation suivant deux axes perpendiculaires à l'axe principal dudit manche, ce dispositif étant avantageusement constitué par un joint de cardan.

Selon un quatrième mode d'exécution, l'extrémité proximale du manche est reliée audit pommeau d'appui hémisphérique au moyen d'une articulation cylindrique.

Les buts caractéristiques et avantages ci-dessus, et d'autres encore, ressortiront mieux de la description qui suit et des dessins annexés, dans lesquels :
- La figure 1 est une vue en perspective d'un premier exemple de réalisation de l'outil aérien portatif selon l'invention.
- La figure 2 est une vue de détail, de face et à plus grande échelle, de la partie proximale du manche de l'outil.
- La figure 3 est une vue en coupe axiale selon la ligne 3-3 de la figure 2.
- La figure 4 est une vue de détail à échelle agrandie, de la figure 3.
- La figure 5 est une vue éclatée de la figure 2.
- La figure 6 est une vue en perspective illustrant un exemple d'utilisation de l'outil aérien portatif selon l'invention.
- Les figures 7, 8, 9 sont, respectivement des vues éclatées, en coupe longitudinale et de détail, comparables aux figures 5, 3 et 4 et illustrant un 2ème mode d'exécution de l'invention.
- Les figures 10, 11, 12 sont, respectivement des vues éclatées, en coupe longitudinale et en coupe selon la ligne 12-12 de la figure 11 et illustrant un 3ème mode d'exécution de l'invention.
- Les figures 13, 14 et 15 sont, respectivement des vues éclatées, en coupe longitudinale et de détail, comparables aux figures 5, 3 et 4 et illustrant un 4ème mode d'exécution de l'invention.
- Les figures 16 et 17 sont des vues en coupe axiale du pommeau d'appui muni d'un organe de commande et illustré, respectivement, dans une position non active ou position neutre et dans une position active ou position de travail.

On se réfère auxdits dessins pour décrire des exemples de réalisation intéressants, quoique nullement limitatifs, de l'outil aérien portatif selon l'invention.

Dans la présente description et dans les revendications, le terme « aérien » signifie « qui se trouve supporté en l'air et à distance des mains de l'opérateur lors de l'utilisation de l'outil ».

D'autre part, les termes « supérieure » et « inférieure » sont utilisés en rapport avec la position de l'outil lors de son utilisation.

L'outil aérien portatif, selon l'invention, est du genre comprenant un long manche 1 principalement constitué par une perche 2 à l'extrémité distale 2a de laquelle est installé la tête de travail ou outil proprement dit 3. La perche 2 est préférentiellement constituée par un long tube métallique ou en matériaux composites présentant les qualités de rigidité et de robustesse souhaitables, éventuellement réalisée en deux ou plus de deux tronçons assemblés de manière télescopique.

Sur la partie proximale 2b de la perche 2, est fixé un boitier technique 4 disposé à proximité de la partie proximale 1a du manche 1, et constitué d'un carter 4a, par exemple muni d'un organe 4b de connexion à une source de courant (en cas de fonctionnement électrique) et d'un dispositif de commande 4c (interrupteur marche-arrêt) et qui peut renfermer un système de contrôle et de gestion (carte électronique) du fonctionnement de l'outil proprement dit. Les outils aériens portatifs de ce genre sont, d'autre part, munis d'une motorisation, laquelle peut être disposée à proximité dudit boitier technique 4 ou à proximité de l'outil proprement dit 3. Cette motorisation, l'actionneur de l'outil proprement dit et le système de transmission reliant ladite motorisation audit actionneur, n'entrent pas dans le cadre de l'invention et ne sont donc pas décrits.

Le carter 4a du boitier technique 4 est rigidement solidaire de la partie proximale 2b de la perche 2 et disposé dans le prolongement de ladite partie proximale, de sorte que l'on considère que ledit carter constitue la partie proximale du manche 1. Le manche ainsi réalisé peut avoir une longueur comprise entre 50 cm et 350 cm, par exemple une longueur de l'ordre de 230 cm.

Selon une disposition caractéristique de l'invention, l'extrémité proximale 1a du manche 1 est munie d'un pommeau d'appui hémisphérique 5, ou comportant une base d'appui de forme hémisphérique, relié à ladite extrémité par un système de liaison 6 autorisant une liberté de mouvement angulaire relatif dudit manche par rapport audit pommeau d'appui hémisphérique.

Grâce à cette disposition caractéristique, l'utilisateur peut commodément faire tourner le manche 1 et, par conséquent, l'outil 3, au-delà de l'angle acceptable par son poignet et/ou soutenir et déplacer ledit manche suivant son axe. Les degrés de liberté de la liaison obtenus permettent de limiter la transmission des vibrations à l'utilisateur tout en procurant une certaine précision de manoeuvre de l'outil 3.

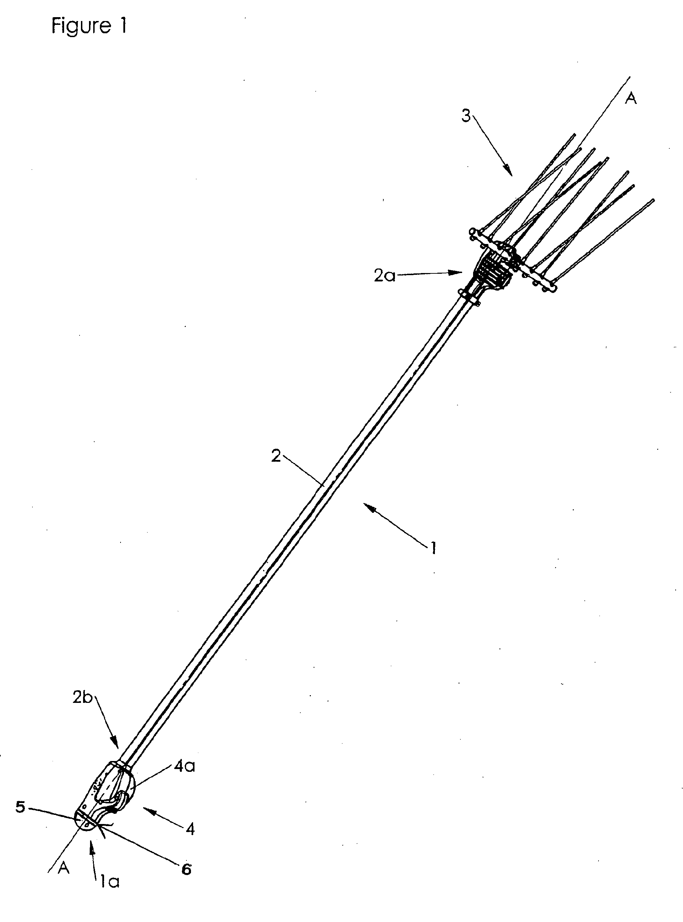

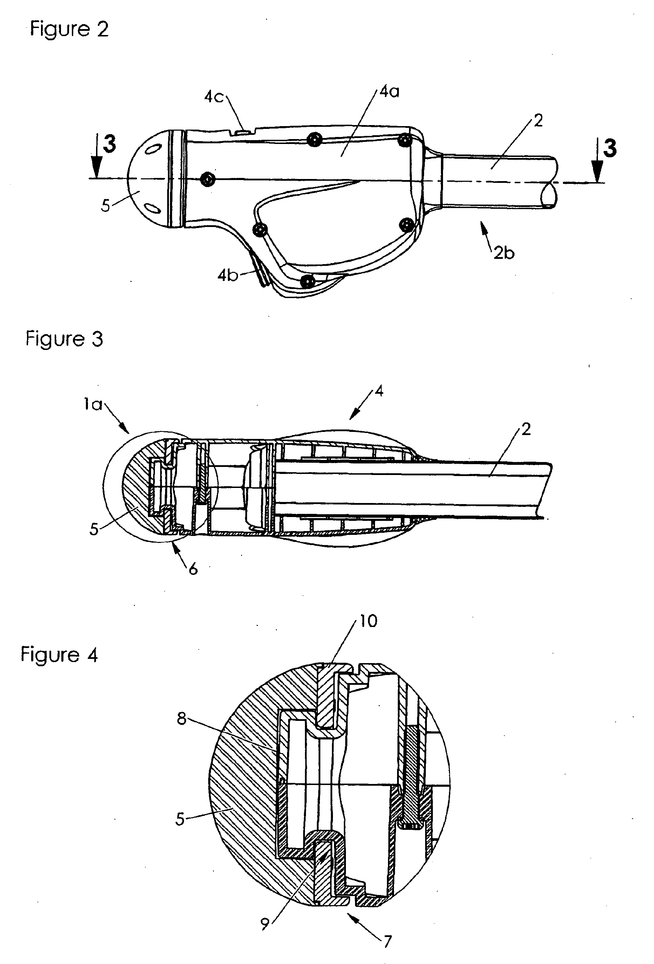

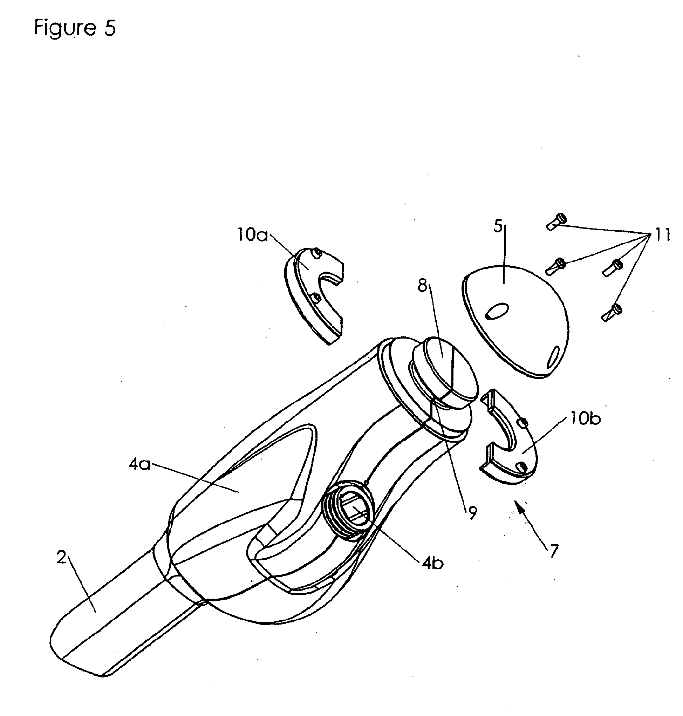

Selon un premier mode d'exécution avantageux illustré aux figures 1 à 5, l'extrémité proximale du manche 1 a est reliée au pommeau d'appui hémisphérique 5 par un agencement ou système de liaison 6 autorisant une liberté de rotation dudit manche autour de son axe A-A, comprise entre 0 ° et 360°, et de préférence une rotation de 360°.

Selon ce mode d'exécution, le pommeau d'appui hémisphérique 5 est relié à l'extrémité proximale 1a du manche 1 par l'intermédiaire d'un palier 7. Ce palier comprend un pivot 8 solidaire de l'extrémité proximale 1 a du manche 1 et muni d'une gorge annulaire 9 dans laquelle est montée, avec une liberté de rotation, une bague 10 fixée au pommeau d'appui hémisphérique 5, par exemple par l'intermédiaire de vis 11. Cette bague 10 est constituée en deux demi-parties 10a, 10b, pour permettre son montage dans la gorge annulaire 9 du pivot 8.

Lors de l'utilisation de l'appareil selon l'invention, le pommeau d'appui hémisphérique 5 est destiné à reposer dans la paume ou creux de l'une des mains de l'opérateur, de sorte que le manche 1 se trouve totalement désolidarisé de la partie de l'appareil (pommeau d'appui hémisphérique 5) tenue par l'opérateur.

On comprend que l'orientation de l'outil par rapport à l'axe du manche 1 est obtenue en faisant pivoter ledit manche autour dudit axe. D'autre part, l'inclinaison dans n'importe quelle direction du manche est obtenue au moyen de la main entourant ce dernier qui pivote dans la paume de l'autre main qui soutient l'outil.

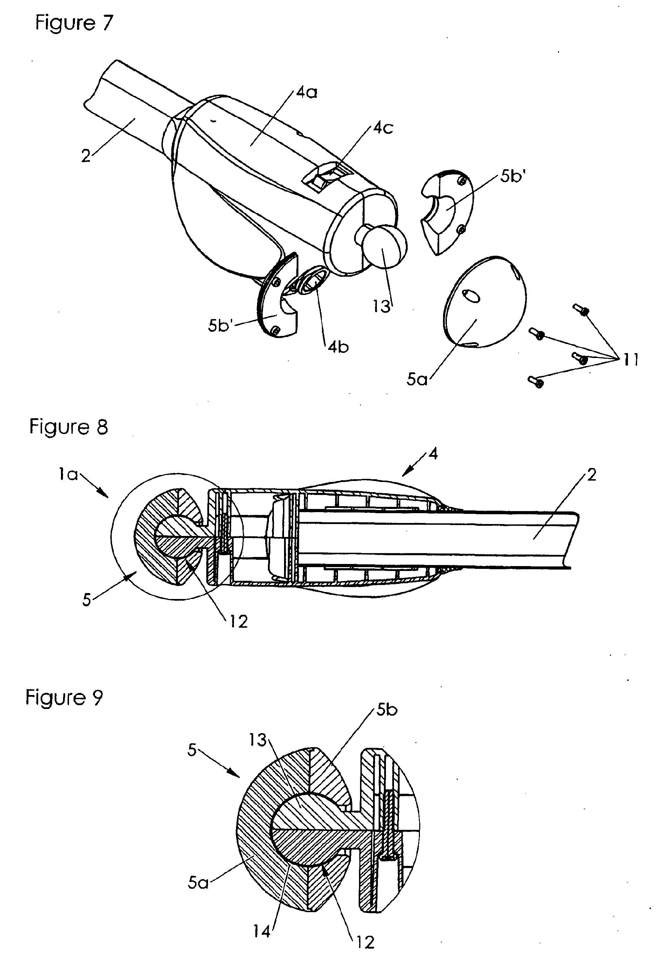

Selon un deuxième mode de mise en oeuvre représenté aux figures 7 à 9, la partie proximale 1 a du manche 1 est reliée au pommeau d'appui hémisphérique 5 par l'intermédiaire d'une articulation sphérique 12.

Cette articulation sphérique ou articulation à rotule 12 comprend un pivot fixe 13 constitué par une portion de sphère solidaire de l'extrémité inférieure ou extrémité proximale 1a du manche 1, tandis que le pommeau d'appui hémisphérique 5 comporte un évidement sphérique 14 dans lequel est montée ladite portion de sphère 13. Le pommeau d'appui 5 est réalisé en deux parties 5a, 5b, par exemple assemblées par vissage et comportant chacune une demi-sphère creuse disposée autour du pivot sphérique. La partie interne 5b est elle-même réalisée en deux demi-parties 5b', pour faciliter la construction.

Selon ce mode de réalisation, le manche 1 peut pivoter dans toutes les directions autour du centre de la sphère 13-14.

Notamment, il peut être incliné dans toutes les directions sans frottement sur la paume de la main qui le soutient.

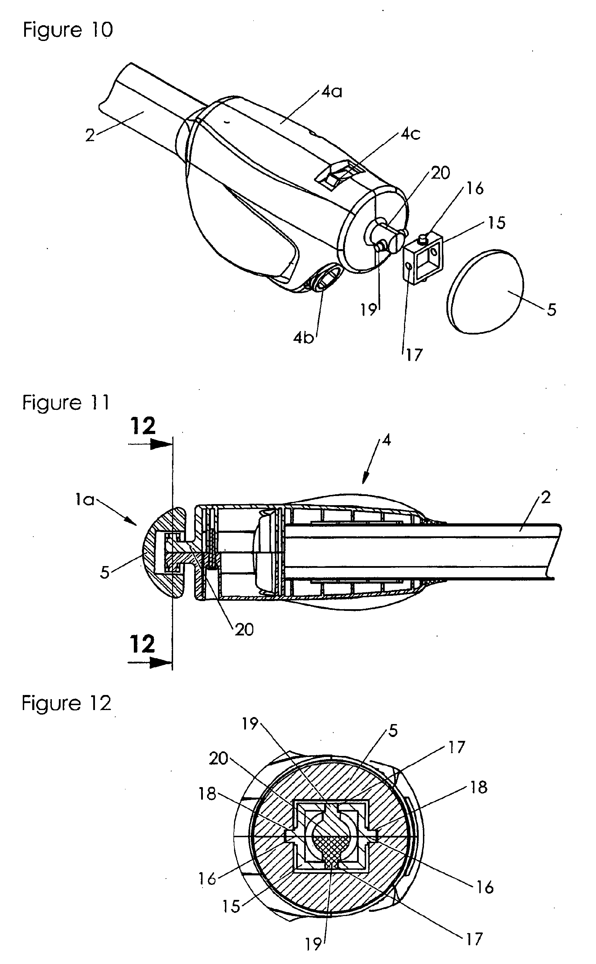

Selon un troisième mode de réalisation représenté aux figures 10 à 12, la partie proximale 1a du manche 1 est reliée au pommeau d'appui hémisphérique 5 par l'intermédiaire d'un dispositif permettant un mouvement de rotation du manche suivant deux axes perpendiculaires à l'axe principal dudit manche, ce dispositif étant avantageusement constitué par un joint de cardan.

Selon le mode d'exécution illustré, ce dispositif comprend un cadre 15 dont deux cotés parallèles sont munis, extérieurement et en alignement sur un premier axe, d'un tourillon 16, et dont les deux autres cotés sont pourvus d'un trou 17 en alignement sur un deuxième axe perpendiculaire au précédent.

Les tourillons 16 sont montés tournant dans des trous alignés 18 ménagés dans deux parois parallèles d'un évidement que présente la face interne du pommeau d'appui hémisphérique 5, tandis que ledit cadre est monté avec une aptitude de pivotement par l'intermédiaire des trous 17 autour de tourillons alignés 19 dont est muni un support axial cylindrique 20 disposé dans le prolongement de l'extrémité proximale du manche et solidaire de celle-ci.

Selon ce mode d'exécution, l'orientation de l'outil par rapport à l'axe du manche 1 peut être obtenue par pivotement de ce dernier autour de son axe, le pommeau 5 glissant dans la paume de la main lors de cette rotation.

D'autre part, l'inclinaison du manche 1 de l'outil est possible dans deux plans perpendiculaires, suivant deux axes perpendiculaires.

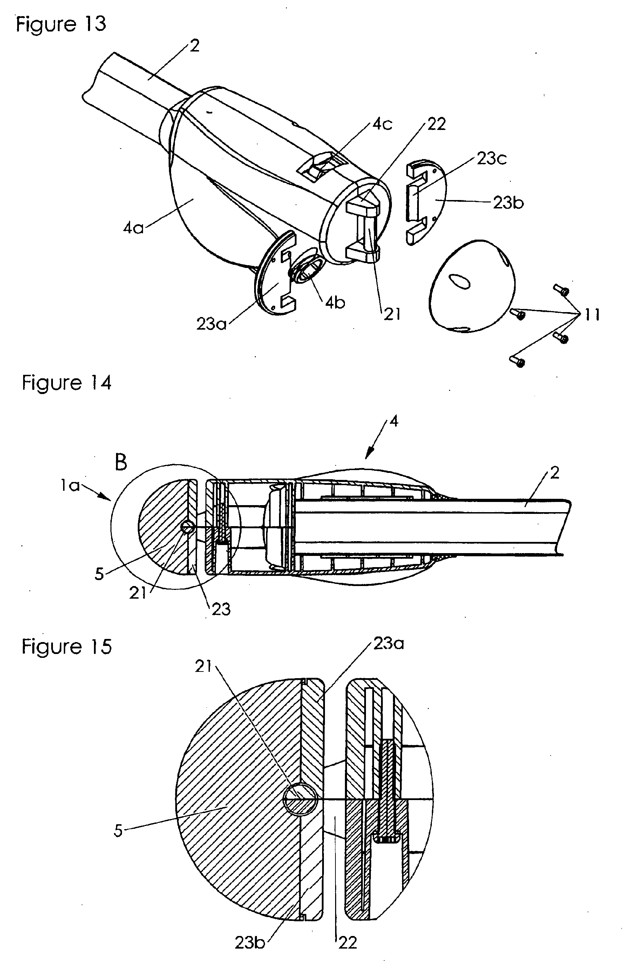

Selon un quatrième mode d'exécution montré aux figures 13 à 15, l'extrémité proximale 1 a du manche 1 est reliée audit pommeau d'appui hémisphérique 5 au moyen d'une articulation cylindrique.

Selon le mode de réalisation représenté, le pommeau d'appui hémisphérique 5 est relié à l'extrémité proximale 1 a du manche 1 par l'intermédiaire d'un axe 21 solidaire de l'extrémité proximale 1a du manche 1 par l'entremise de deux pattes espacées 22. Cet axe 21 est, par exemple, disposé perpendiculairement à l'axe A-A dudit manche 1, mais il peut également être incliné par rapport audit axe.

Sur cet axe 21, est montée, avec une aptitude de basculement, une plaque circulaire 23 traversée diamétralement par ledit axe 21 d'articulation. Cette plaque est fixée, par exemple par vissage, sur la face interne du pommeau d'appui 5.

Pour répondre aux nécessités de montage, la plaque la plaque 23 est réalisée en deux demi-parties 23a-23b, comportant chacune une gorge 23c de sorte que l'assemblage de ces deux demi-parties permet d'obtenir le logement cylindrique dans lequel peut pivoter l'axe d'articulation 21 et, par conséquent, également le manche 1 de l'outil.

Selon ce mode de réalisation, l'orientation de l'outil par rapport à l'axe A-A du manche 1 peut être obtenue par pivotement de ce dernier autour de son axe, la base hémisphérique du pommeau 5 glissant dans la paume de la main lors de cette rotation.

D'autre part, l'inclinaison du manche 1 de l'outil autour de l'axe 21, est possible dans un seul plan, suivant un seul axe.

De préférence, le pommeau d'appui 5 est disposé coaxialement au manche 1, mais il peut également être porté par un axe parallèle à l'axe A-A du manche 1, voire même incliné par rapport à cet axe.

Avantageusement, le dispositif de commande de l'outil est constitué par un contacteur ou tout autre système électro-sensible intégré dans le pommeau d'appui 5. Ce système électro-sensible peut, par exemple, être constitué par un capteur à effet Hall, un capteur capacitif, ...

Selon un mode de mise en oeuvre intéressant, le système de commande est disposé dans la partie centrale du pommeau d'appui hémisphérique 5 et il comprend un organe d'actionnement émergeant dudit pommeau d'appui dans la position d'arrêt de l'outil.

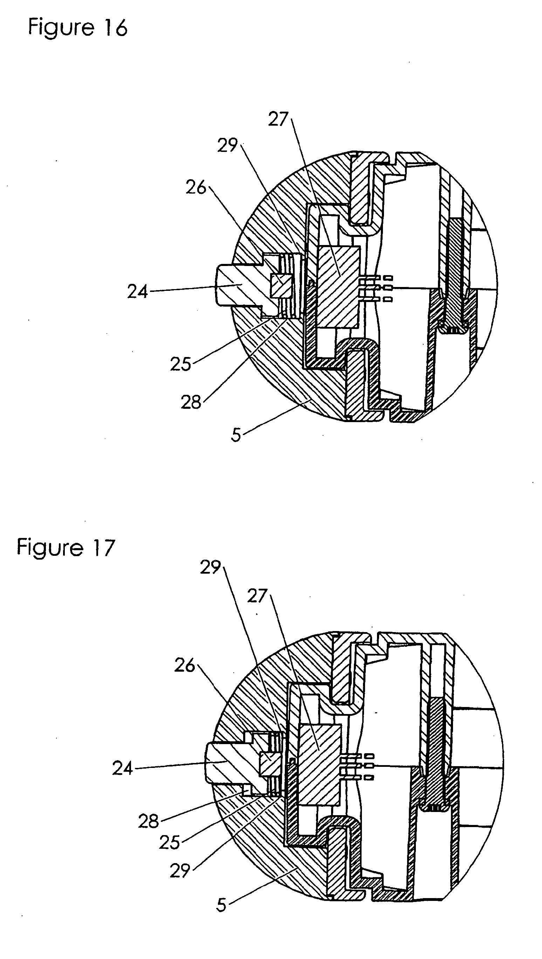

Selon l'exemple représenté aux figures 16 et 17, le système électro-sensible est constitué d'un dispositif à effet Hall. Ce dispositif comprend, d'une part, un aimant 26 fixé à l'extrémité interne d'un bouton poussoir 24 constituant l'organe d'actionnement du système de commande, et, d'autre part, un capteur à effet Hall 27 disposé dans le pivot 8 dont est munie l'extrémité proximale 1 a du manche 1. Ce capteur 27 est par ailleurs disposé en regard de l'aimant 26.

Le bouton poussoir 24 est disposé avec une aptitude de mouvement axial dans un logement cylindrique 28 ménagé dans le pommeau d'appui hémisphérique 5. Il comporte une extrémité d'actionnement qui se trouve en sailli, par rapport à la surface externe d'appui du pommeau hémisphérique 5, au centre dudit pommeau, en position d'arrêt de l'outil. D'autre part, il est assujetti à l'action d'un organe élastique constitué, de préférence, par un ressort de compression 25 tendant à le repousser dans le fond du logement cylindrique 28 de sorte à l'éloigner du capteur 27.

Le ressort 25 est calé, par l'intermédiaire de ses extrémités opposées, d'une part, contre l'extrémité interne du bouton poussoir 24 et, d'autre part, contre un épaulement circulaire 29 disposé à l'entrée du logement cylindrique 28.

Selon ce mode de réalisation, lorsque l'outil est positionné sur la paume de la main qui le soutient, le bouton poussoir est automatiquement poussé à l'intérieur du logement cylindrique 28 dont est pourvu le pommeau 5, en entraînant le rapprochement de l'aimant 26 du capteur à effet Hall 27 qui se trouve ainsi activé, et autorise ainsi la mise en marche et le fonctionnement de l'outil proprement dit 3, via les différents systèmes qui équipent généralement les outils de type aérien.

Lorsque l'utilisateur retire l'outil de sa main de soutien, l'action antagoniste de l'organe élastique 25 tend à ramener le bouton poussoir dans une position neutre et donc à éloigner l'aimant 26 du capteur 27, commandant ainsi l'arrêt de l'outil.

Le système électro-sensible de commande illustré aux figures 16 et 17 est appliqué au système de liaison illustré aux figures 1 à 5, mais il peut être adapté à tous les modes de réalisation de l'outil exposés ci-dessus.

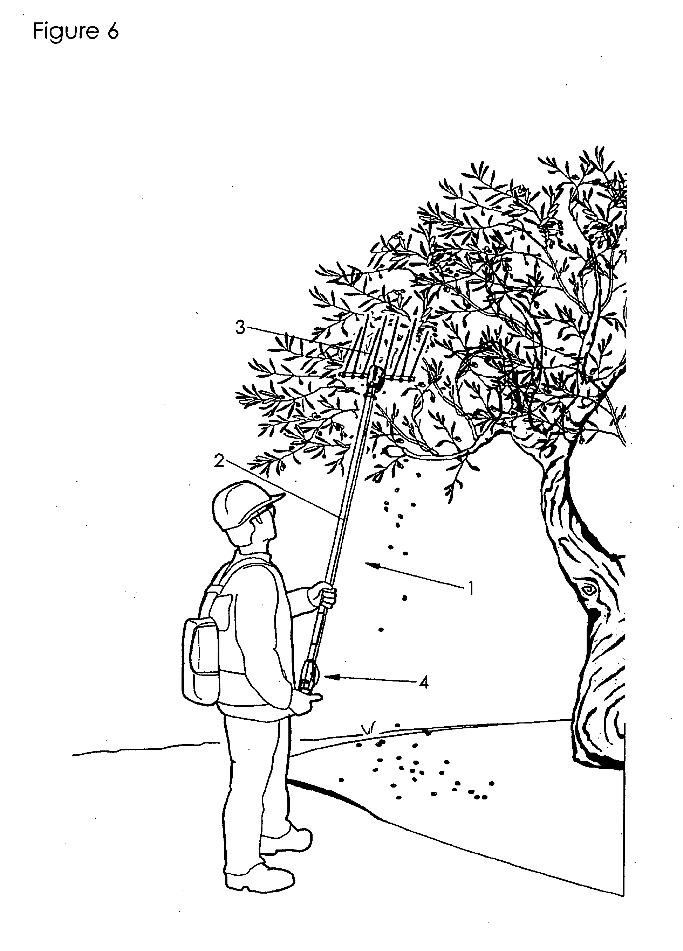

Selon l'exemple d'application illustré aux figures 1 et 6, l'outil 3 équipant l'extrémité supérieure 1a du manche 1, est constitué par une tête de récolte de petits fruits comportant une pluralité de doigts mobiles qui peuvent être animés d'un mouvement vibratoire généré par la motorisation de l'appareil, de sorte à permettre de secouer la ramure des arbres fruitiers et à provoquer ainsi le détachement des fruits. Un tel appareil, par exemple décrit dans le document WO-01/50838 A1, est particulièrement efficace pour la récolte des olives.

Toutefois, l'outil 3 pourrait être d'un type conçu pour réaliser d'autres fonctions, par exemple sous forme d'outil de coupe pour l'élagage ou la taille des arbres fruitiers, ou des arbres d'ornement ou d'agrément ou des arbres forestiers.

## Revendications

1. Outil aérien portatif, en particulier pour l'utilisation en arboriculture fruitière ou pour l'entretien d'espaces verts, du genre comportant un outil (3) dédié à une fonction déterminée, installé à l'extrémité distale d'un long manche (1), pour lequel l'extrémité proximale (1a) du manche (1) est reliée à un pommeau d'appui (5) par un système de liaison (6) autorisant une liberté de mouvement angulaire relatif dudit manche (1) par rapport audit pommeau d'appui (5) **caractérisé en ce que** ledit pommeau d'appui (5), est destiné à reposer dans la paume ou creux de l'une des mains de l'utilisateur, lors de l'utilisation dudit outil.

2. Outil aérien portatif selon la revendication 1, **caractérisé en ce que** l'extrémité proximale (1a) du manche (1) est reliée au pommeau d'appui (5) par un agencement ou système (6) autorisant une liberté de rotation dudit manche (1) autour de son axe (A-A).

3. Outil aérien portatif selon l'une des revendications 1 ou 2, **caractérisé en ce que** le pommeau d'appui (5) est de forme hémisphérique ou comporte une base d'appui de forme hémisphérique.

4. Outil aérien portatif selon l'une des revendications 1 à 3, **caractérisé en ce que** le pommeau d'appui (5) est disposé coaxialement au manche (1).

5. Outil aérien portatif selon l'une quelconque des revendications 1 à 4, **caractérisé en ce qu'**il est muni d'un boîtier technique (4) rigidement, solidaire de la partie proximale (2b) d'une perche (2) constituent principalement le manche de l'outil disposé dans le prolongement de ladite partie proximale de la perche, le pommeau d'appui (5) étant relié à l'extrémité distale dudit boîtier constituant la partie proximale (1a) du manche (1).

6. Outil aérien portatif selon la revendication 5, **caractérisé en ce que** ledit boîtier (4) comporte un organe de connexion (4b) à une source de courant et renferme un système de contrôle et de gestion du fonctionnement de l'outil ; il peut encore être muni d'un dispositif de commande (4c).

7. Outil aérien portatif selon l'une quelconque des revendications 1 à 6, comportant un dispositif de commande, **caractérisé en ce que** ce dispositif de commande est constitué par un système électro-sensible (26, 27) intégré dans le pommeau d'appui (5).

8. Outil aérien portatif selon la revendication 7, **caractérisé en ce que** le système électro-sensible est constitué par un dispositif à effet Hall ou un dispositif comprenant un capteur capacitif.

9. Outil aérien selon l'une des revendications 6 ou 7, **caractérisé en ce que** le système de commande est constitué par un bouton poussoir (24) disposé dans la partie centrale du pommeau d'appui hémisphérique (5) et émerge de ce dernier dans la position d'arrêt de l'outil

10. Outil aérien portatif selon l'une des revendications 7 ou 8, **caractérisé en ce que** le système électro-sensible est constitué, d'une part, d'un aimant (26) fixé à l'extrémité interne d'un bouton poussoir (24), et, d'autre part, d'un capteur à effet Hall (27) disposé dans l'extrémité proximale (1a) du manche (1) en regard de l'aimant (26) ledit bouton poussoir (24) étant disposé avec une aptitude de mouvement axial dans un logement (28) ménagé dans le pommeau d'appui hémisphérique (5), de sorte à permettre le rapprochement ou l'éloignement de l'aimant par rapport au capteur à effet Hall, ledit bouton poussoir étant assujetti à l'action d'un organe élastique (25) tendant à le repousser dans le fond du logement (28), de sorte à l'éloigner du capteur (27).

11. Outil aérien portatif selon la revendication 2, **caractérisé en ce que** le système de liaison (6) est constitué d'un palier (7) comprenant un pivot (8) solidaire de l'extrémité proximale (1a) du manche (1) et muni d'une gorge annulaire (9) dans laquelle est montée, avec une liberté de rotation, une bague (10) fixée au pommeau d'appui (5).

12. Outil aérien portatif selon l'une quelconque des revendications 1, ou 3 à 10, **caractérisé en ce que** l'extrémité proximale (1a) du manche (1) est reliée au pommeau d'appui (5) par l'intermédiaire d'une articulation sphérique.

13. Outil aérien portatif selon la revendication 12, **caractérisé en ce que** l'articulation sphérique (12) comprend un pivot fixe (13) constitué par une portion de sphère solidaire de l'extrémité proximale (1a) du manche (1), et un évidement sphérique (14) que comporte le pommeau d'appui (5), et dans lequel est logé ledit pivot sphérique (12).

14. Outil aérien portatif selon l'une quelconque des revendications 1, ou 3 à 10, **caractérisé en ce que** l'extrémité proximale (1a) du manche (1) est reliée au pommeau d'appui (5) par l'intermédiaire d'un dispositif permettant un mouvement de rotation du manche (1) suivant deux axes perpendiculaires à l'axe principal dudit manche, ce dispositif étant avantageusement constitué par un joint de cardan.

15. Outil aérien portatif selon la revendication 14, **caractérisé en ce que** le joint de cardan comprend un cadre (15) dont deux cotés parallèles sont munis, extérieurement et en alignement sur un premier axe, d'un tourillon (16) apte à être montés tournant dans des trous alignés (18) ménagés dans la face interne du pommeau (5), et dont les deux autres cotés sont pourvus d'un trou (17) apte à coopérer avec un tourillon (19) dont est muni un support axial cylindrique (20) disposé dans le prolongement de l'extrémité proximale (1a) du manche (1).

16. Outil aérien portatif selon l'une quelconque des revendications 1 à 11, **caractérisé en ce que** l'extrémité proximale (1a) du manche (1) est reliée audit pommeau d'appui (5) au moyen d'une articulation cylindrique.

17. Outil aérien portatif selon la revendication 16, caractérisé en ce l'articulation cylindrique comprend :
- un axe (21) solidaire de l'extrémité distale (1a) du manche (1) par l'intermédiaire de deux pattes espacées (22) ; et
- une plaque circulaire (23) réalisée en deux demi-parties (23a, 23b) comprenant chacune une gorge (23c) formant un logement cylindrique apte à recevoir l'axe (21).

## Patentansprüche

1. Tragbares Werkzeug, insbesondere zur Verwendung in der Obstbaumkultur und zur Instandhaltung von Grünflächen, umfassend ein Werkzeug (3) mit einer vorbestimmten Funktion, die an dem distalen Ende einer langen Hülse (1) angebracht ist, wobei am proximalen Ende (1a) der Hülse (1) ein Betätigungsknauf (5) über eine Verbindungseinrichtung (6) angeschlossen ist, welche eine Winkelbewegung relativ zu der besagten Hülse (1) bezogen auf den Betätigungsknauf (5) erlaubt, **dadurch gekennzeichnet, dass** der Betätigungsknauf (5) dazu bestimmt ist in der Handfläche oder der Handhöhle einer Hand des Benutzers während der Benutzung des Werkzeugs zu ruhen.

2. Tragbares Werkzeug nach Anspruch 1, **dadurch gekennzeichnet, daß** das proximale Ende (1a) der Hülse (1) mit dem Betätigungsknauf (5) durch ein System oder Anordnung (6) verbundenen ist, die eine freie Drehung der Hülse (1) um seine Achse (A-A) erlaubt.

3. Tragbares Werkzeug nach einem der Ansprüche 1 oder 2, **dadurch gekennzeichnet, dass** der Betätigungsknauf (5) halbkugelförmig ausgebildet ist und eine halbkugelförmige Trägerbasis aufweist.

4. Tragbares Werkzeug nach einem der Ansprüche 1 bis 3, **dadurch gekennzeichnet, dass** der Betätigungsknauf (5) koaxial zu der Hülse (1) angeordnet ist.

5. Tragbares Werkzeug nach einem der Ansprüche 1 bis 4, **dadurch gekennzeichnet, dass** es mit einem starren Gehäuse (4) an dem proximalen Abschnitt (2b) einer Stange (2) versehen ist, welche grundsätzlich den Griff des Werkzeugs bildet, angeordnet an der Verlängerung des proximalen Abschnittes der besagten Stange, wobei der Betätigungsknauf (5) am distalen Ende des genannten Gehäuses befestigt ist, das den proximalen Abschnitt (1a) der Hülse (1) bildet.

6. Tragbares Werkzeug nach Anspruch 5, **dadurch gekennzeichnet, daß** das Gehäuse (4) ein Verbindungselement (4b) zu einer Stromquelle umfasst und ein Steuersystem und Funktionsüberwachungssystem des Werkzeuges; wobei es auch noch mit einem Steuergerät (4c) ausgestattet sein kann.

7. Tragbares Werkzeug nach einem der Ansprüche 1 bis 6, mit einer Steuereinrichtung, **dadurch gekennzeichnet, daß** die Steuereinrichtung aus einem berührungslos wirkenden System (26, 27) besteht, die im Betätigungsknauf (5) integriert ist.

8. Tragbares Werkzeug nach Anspruch 7, **dadurch gekennzeichnet, daß** das berührungslos wirkende System aus einem Hall-Effekt-Sensor oder einer Vorrichtung, die einen kapazitiven Sensor aufweist, besteht.

9. Tragbares Werkzeug nach einem der Ansprüche 6 oder 7, **dadurch gekennzeichnet, daß** das Steuersystem einen Druckknopf (24), der in dem zentralen Abschnitt des halbkugelförmigen Betätigungsknaufs (5) angeordnet ist, umfasst und mittels diesem in die Stopp-Position des Werkzeugs betätigbar ist.

10. Tragbares Werkzeug nach einem der Ansprüche 7 oder 8, **dadurch gekennzeichnet, daß** das berührungslos wirkende System erstens einen Magneten (26), der an dem inneren Ende eines Druckknopfes (24) befestigt ist, und zweitens einen Hall-Sensor (27) der am proximalen Ende der Hülse (1) gegenüber dem Magneten (26) angeordnet ist, aufweist, der genannte Druckkopf (24) ist mit einer Fähigkeit zur axialen Bewegung in einem Gehäuse (28) ausgebildet, das in dem halbkugelförmigen Betätigungsknaufs (5) untergebracht ist, derart, um die Ausrichtung oder den Abstand des Magneten zu dem Hall-Effekt-Sensor zu ermöglichen, wobei der Druckknopf unter der Wirkung eines elastischen Elements (25) dazu tendiert an den Boden des Gehäuses (28), weiter weg vom Sensor (27), zurückgeschoben zu werden.

11. Tragbares Werkzeug nach Anspruch 2, **dadurch gekennzeichnet, dass** das Verbindungssystem (6) ein Lager (7) mit einem Drehzapfen (8) zusammen mit dem proximalen Ende (1a) der Hülse (1) ausbildet und mit einer ringförmige Nut (9) ausgestattet ist, an der ein drehbarer Ring (10) montiert ist, der an dem Betätigungsknaufs (5) fixiert ist.

12. Tragbares Werkzeug nach einem der Ansprüche 1, oder 3 bis 10, **dadurch gekennzeichnet, daß** das proximale Ende (1a) der Hülse (1) mit dem Betätigungsknaufs (5) mittels eines Kugelgelenks verbunden ist.

13. Tragbares Werkzeug nach Anspruch 12, **dadurch gekennzeichnet, daß** das Kugelgelenk (12) einen festen Drehpunkt (13) aufweist, die aus einem kugelförmigen Abschnitt an dem proximalen Ende (1a) der Hülse (1) besteht und einer sphärischen Ausnehmung (14), die zu dem Betätigungsknaufs (5) gehört und die um das Drehgelenk (12) angeordnet ist.

14. Tragbares Werkzeug nach einem der Ansprüche 1, oder 3 bis 10, **dadurch gekennzeichnet, daß** das proximale Ende (1a) der Hülse (1) mit dem Betätigungsknauf (5) mittels einer Einrichtung verbunden ist, welche eine Drehbewegung der Hülse (1) entlang zweier Achsen senkrecht zu der Hauptachse der Hülse ermöglicht, wobei die Einrichtung vorteilhafterweise aus einem Kardangelenk gebildet ist.

15. Tragbares Werkzeug nach Anspruch 14, **dadurch gekennzeichnet, daß** das Kardangelenk aus einem Rahmen (15) besteht, dessen zwei parallele Seiten, nach außen und in Ausrichtung mit einer ersten Achse mit einem Zapfen (16) ausgebildet sind, der drehbar in Ausrichtung der Löcher (18) in der Innenfläche des Betätigungsknaufs (5) montiert ist und dessen beiden anderen Seiten mit einem Loch (17) versehen sind, ausgebildet um mit einem Stift (19) zusammenzuwirken, der an einer axialen zylindrischen Aufnahme ( 20) in der Verlängerung des proximalen Endes (1a) der Hülse (1) angeordnet ist.

16. Tragbares Werkzeug nach einem der Ansprüche 1 bis 11, **dadurch gekennzeichnet, daß** das proximale Ende (1a) der Hülse (1) mit dem Betätigungsknaufs (5) mittels eines zylindrischen Gelenks verbunden ist.

17. Tragbares Werkzeug nach Anspruch 16, **dadurch gekennzeichnet, daß** des zylindrische Gelenk folgendes umfasst:
- eine Achse (21), integral am distalen Ende (1 a) der Hülse (1) verbunden mittels zweier beabstandeter Zungen (22), und
- eine kreisförmige Platte (23) aus zwei Halbschalen (23a, 23b), die jeweils eine Nut (23c) aufweisen, die ein zylindrisches Gehäuse zur Aufnahme der Achse (21) ausbilden.

## Claims

1. A hand-held air tool, particularly for use in fruit growing or the maintenance of green spaces, of the type comprising a tool (3) dedicated to performing a certain function, installed at the distal end of a long sleeve (1), for which the proximal end (1a) of the sleeve (1) is connected to a supporting head (5) by a connecting system (6) allowing an angular freedom of movement of the sleeve (1) relative to said supporting head (5), **characterised in that** said supporting head (5) is designed to rest in the palm or hollow of one of the hands of the user when using said tool.

2. The hand-held air tool according to Claim 1, **characterised in that** the proximal end (1 a) of the sleeve (1) is connected to the supporting head (5) by an arrangement or system (6) allowing a freedom of rotation of said sleeve (1) about its axis (A-A).

3. The hand-held air tool according to any one of Claims 1 or 2, **characterised in that** the supporting head (5) is hemispherical in shape or comprises a hemispherical support base.

4. The hand-held air tool according to any one of Claims 1 to 3, **characterised in that** the support head (5) is arranged coaxially with the sleeve (1).

5. The hand-held air tool according to any one of Claims 1 to 4, **characterised in that** it is fitted with a technical box (4) that is rigidly integral with the proximal part (2b) of a rod (2) constituting essentially the sleeve of the tool and arranged in the extension of said proximal part of the rod, wherein the support head (5) is connected to the distal end of said box constituting the proximal part (1a) of the sleeve (1).

6. The hand-held air tool according to Claim 5, **characterised in that** said box (4) comprises a mechanism (4b) for connection to a current source and encloses a system for the control and management of the operation of the tool; it may also be fitted with a control device (4c).

7. The hand-held air tool according to any one of Claims 1 to 6, comprising a control device, **characterised in that** this control device consists of an electro-sensitive system (26, 27) integrated in the support head (5).

8. The hand-held support head according to Claim 7, **characterised in that** the electro-sensitive system consists of a Hall effect device or a device comprising a capacitive sensor.

9. The hand-held air tool according to any one of Claims 6 or 7, **characterised in that** the control system consists of a pushbutton (24) arranged in the central part of the hemispherical support head (5) and emerges from the latter in the stop position of the tool.

10. The hand-held air tool according to any one of Claims 7 or 8, **characterised in that** the electro-sensitive system consists on the one hand of a magnet (26) fixed to the inner end of a pushbutton (24), and on the other of a Hall effect sensor (27) arranged in the proximal end (1a) of the sleeve (1) opposite the magnet (26), wherein said pushbutton (24) is arranged with a capacity for axial movement in a housing (28) arranged in the hemispherical support head (5) to enable the magnet to be brought closer to or further from the Hall effect sensor, and wherein said pushbutton is subject to the action of an elastic mechanism (25) tending to push it to the bottom of the housing (28) so that it is moved away from the sensor (27).

11. The hand-held air tool according to Claim 2, **characterised in that** the connection system (6) consists of a bearing (7) comprising a pivot (8) integral with the proximal end (1a) of the sleeve (1) and fitted with an annular groove (9) in which is mounted, with a freedom of rotation, a ring (10) fixed to the support head (5).

12. The hand-held air tool according to any one of Claims 1, or 3 to 10, **characterised in that** the proximal end (1a) of the sleeve (1) is connected to the support head (5) by means of a spherical joint.

13. The hand-held air tool according to Claim 12, **characterised in that** the spherical joint (12) comprises a fixed pivot (13) consisting of a sphere portion integral with the proximal end (1a) of the sleeve (1), and a spherical recess (14) which is arranged in the support head (5) and in which said spherical pivot (12) is housed.

14. The hand-held air tool according to any one of Claims 1, or 3 to 10, **characterised in that** the proximal end (1a) of the sleeve (1) is connected to the support head (5) by means of a device that allows a rotary movement of the sleeve (1) along two axes perpendicular to the principal axis of said sleeve, wherein this device advantageously consists of a cardan joint.

15. The hand-held air tool according to Claim 14, **characterised in that** the cardan joint comprises a frame (15) both parallel sides of which are fitted, on the outside and in alignment with a first axis, with.a bearing pin (16) suitable for mounting rotatably in aligned holes (18) arranged in the inner face of the head (5), and the other sides of which are provided with a hole (17) capable of interacting with bearing pin (19), with which is fitted a cylindrical axial support (20) arranged in the extension of the proximal end (1 a) of the sleeve (1).

16. The hand-held air tool according to any one of Claims 1 to 11, **characterised in that** the proximal end (1a) of the sleeve (1) is connected to said support head (5) by means of a cylindrical joint.

17. The hand-held air tool according to Claim 16, **characterised in that** this cylindrical joint comprises:
- a shaft (21) integral with the distal end (1a) of the sleeve (1) by means of two spaced lugs (22); and
- a circular plate (23) made of two half-sections (23a, 23b) each comprising a groove (23c) forming a cylindrical housing capable of receiving the shaft (21).
